(19) **Europäisches Patentamt**

**European Patent Office**

**Office européen des brevets**

(11) **EP 1 123 727 A1**

(12) **EUROPEAN PATENT APPLICATION**

(43) Date of publication:
**16.08.2001 Bulletin 2001/33**

(51) Int Cl.⁷: **B01D 53/68**, B01D 53/70,
A62D 3/00

(21) Application number: **01400160.6**

(22) Date of filing: **19.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **08.02.2000 JP 2000030094**

(71) Applicants:
• **L'AIR LIQUIDE, SOCIETE ANONYME POUR L'ETUDE ET L'EXPLOITATION DES PROCEDES GEORGES CLAUDE**
**75321 Paris Cédex 07 (FR)**
• **Air Liquide Electronics Systems**
**75007 Paris (FR)**

(72) Inventors:
• **Hiraoka, Manabu**
**75321 Paris cedex 07 (FR)**
• **Kawanaka, Hideji**
**75321 Paris cedex 07 (FR)**
• **Ibaraki, Yoshihiro**
**75321 Paris cedex 07 (FR)**
• **Ando, Shinichi**
**75321 Paris cedex 07 (FR)**

(74) Representative: **Vesin, Jacques et al**
**L'Air Liquide,**
**Service Propriété Intellectuelle,**
**75 Quai d'Orsay**
**75321 Paris Cedex 07 (FR)**

(54) **Perfluoro compounds decomposition method and decomposition apparatus therefor**

(57) A decomposition method for effectively decomposing PFC at a low temperature and in safety by use of a chemically and intensively more stable reactant, a reactant for use therein and a decomposition apparatus therefor are provided.

A perfluoro compounds decomposition method which comprises bringing a gas containing perfluoro compounds under heating into contact with a solid reactant, thereby fixing the fluorine component on said reactant, is characterized in that said reactant contains an alkaline earth metal compound and aluminum oxide.

FIG. 1

EP 1 123 727 A1

**Description**

Detailed Description of The Invention

Field of the Invention

The present invention relates to a decomposition method for decomposing perfluoro compounds (which will be hereinafter called PFC) such as SF6, CF4 and C2F6 by use of a reactant, a reactant for use therein and a decomposition apparatus therefor.

Prior Arts

PFC has been hitherto used as an etching agent or a machine-cleaning agent in semiconductor-manufacturing factories. However, PFC has been proved to cause the warming of Earth, as recently discussed in Earth Warming Meeting or the like, if it is directly released to the atmosphere. It is therefore desired that PFC is decomposed after its use.

As prior arts for decomposition of PFC, there have been hitherto proposed a reactant decomposition method, a catalyst decomposition method and a combustion decomposition method. Since PFC is poor in reactivity (in thermal decomposition, heating of more than 1,100°C is required) due to its extremely strong intermolecular bonding strength, the reactant decomposition method or catalyst decomposition method is advantageous in view of energy. A decomposition method using a reactant has such advantages that fluorine gas or hydrofluoric acid are less discharged out of the system and hence their post-treatment is unnecessary because fluorine atoms can be fixed on the reactant, as compared with the catalyst decomposition method, and this method is in many cases more advantageous in view of cost because the supply of water vapor into a feed material is not needed.

As for a PFC decomposition method using a reactant, for example, the official gazette of Japanese Patent Application Laid-open (KOKAI) No. 187,302/1996 gives a method comprising bringing carbon fluorides into contact with a reactant consisting of a carbonaceous solid material and an alkaline earth metal compound in a non-oxidizing atmosphere, and the official gazette of Japanese Patent Application Laid-open (KOKAI) No. 277,353/1998 gives a method comprising bringing carbon fluorides into contact with a reactant containing carbon, an alkaline earth metal and an alkali metal at a temperature of more than 200°C, thereby fixing the halogen component thereof on the reactant.

Problems Sought for Solution by the Invention

However, there have been such problems that when a reactant containing a carbonaceous solid material is used, the intensity of said reactant left after its granulation and sintering is apt to become insufficient, and when oxygen or the like is contained in a gas to be treated, a desired reaction is difficult to be carried out because carbon is consumed in the reaction, whereby the intensity of the reactant is lowered.

It is therefore an object of the present invention to provide a decomposition method for effectively decomposing PFC at a low temperature and in safety by use of a chemically and intensively more stable reactant, a reactant for use therein and a decomposition apparatus therefor.

Means for Solution of the Problems

In order to achieve the aforementioned purpose, the inventors have studied hard the constitutional components of a reactant for use in the decomposition reaction, have found out a fact that the aforementioned purpose can be achieved by using as a reactant aluminum oxide containing an alkaline earth metal compound, and have completed the present invention.

Namely, the decomposition method according to the present invention is a perfluoro compounds decomposition method which comprises bringing a gas containing perfluoro compounds under heating into contact with a solid reactant, thereby fixing the fluorine component on said reactant, characterized in that said reactant contains an alkaline earth metal compound and aluminum oxide.

The reactant according to the present invention is a reactant for decomposition of perfluoro compounds, which contains an alkaline earth metal compound and aluminum oxide.

In the above-mentioned reactant, said alkaline earth metal compound is preferably magnesium oxide.

Furthermore, the decomposition apparatus according to the present invention is a perfluoro compounds decomposition apparatus which comprises a reaction section filled with a solid reactant, gas flow passages capable of feeding a gas containing perfluoro compounds to said reaction section and of discharging a gas left after the reaction, and heating means for heating said reaction section or the gas to be fed in the same reaction section, characterized in that said reactant is a reactant for decomposition of perfluoro compounds, as mentioned above.

Operational Effects

Since a reactant containing an alkaline earth metal compound and aluminum oxide is used, according to the decomposition method of the present invention, PFC can be effectively decomposed at a low temperature and in safety by use of a chemically and intensively more stable reactant, as exhibited by the results of examples. Although the reason thereof is not proven, it will be estimated as follows.

Namely, it is conceived that when an alkaline earth metal compound is reacted with perfluoro compounds to fix the fluorine component, aluminum oxide has a catalytic function of promoting the same reaction. Accordingly, aluminum oxide is not consumed in this reaction and it acts as a binder component, thereby making the reactant a chemically and intensively more stable reactant. Since aluminum oxide has a function as a catalyst or reactant for the decomposition of PFC even when it is alone, in addition, the decomposition efficiency of PFC can be maintained in some degree even if the alkaline earth metal compound is consumed.

According to the reactant of the present invention, PFC can be effectively decomposed at a low temperature and in safety by use of a chemically and intensively more stable reactant, owing to the aforementioned reasons.

In a case where said alkaline earth metal compound is magnesium oxide, it is conceived that PFC can be directly and effectively decomposed in accordance with the following reaction formulae.

$$CF_4 + 2MgO \rightarrow 2MgF_2 + CO_2.$$

$$C_2F_6 + 3MgO \rightarrow 3MgF_2 + 2CO + 1/2O_2.$$

$$SF_6 + 3MgO \rightarrow 3MgF_2 + SO_2 + 1/2O_2.$$

As for another alkaline earth metal compound, the similar reaction will be estimated. Also in the case of a metal carbonate or metal nitrate, the above-mentioned reaction is conceived as a part of the element reaction because it produces a metal oxide during the sintering of its manufacture or during the decomposition reaction.

According to the decomposition apparatus of the present invention, furthermore, PFC can be effectively decomposed at a low temperature and in safety by use of a chemically and intensively more stable reactant, similarly to the aforementioned case.

Embodiments of the Invention

In the next place, embodiments of the present invention will be described in the order of the reactant for decomposition of PFC, the PFC decomposition apparatus and the PFC decomposition method.

Reactant for decomposition of PFC

The reactant for decomposition of PFC according to the present invention is one containing an alkaline earth metal compound and aluminum oxide.

As an alkaline earth metal constituting the alkaline earth metal compound, there are exemplified Be, Mg, Ca, Sr and Ba, and Ca and Mg will be preferably used. As an alkaline earth metal compound, there are exemplified salts such as oxides, hydroxides and carbonates of alkaline earth metals, and oxides of alkaline earth metals will be preferably used. As a concrete example of a feed material for the oxide, hydroxide or carbonate of Ca or Mg, there are exemplified quick lime, slaked lime, marble, magnesium carbonate and dolomite.

These alkaline earth metal compounds can be used alone or as mixed. The content of these metal compounds is usually 0.1 ~ 90 wt%, or preferably 1 ~ 70 wt%, or more preferably 5 ~ 50 wt% in total. The larger the content of these metal compounds is, the more the treating capacity is increased. If the content is too larger, however, there is such a tendency that the initial physical property of a reactant or the physical property thereof in the reaction is lowered.

As aluminum oxide, fÁ-alumina, fÂ-alumina, or a mixture thereof is preferable because of its reacting activity. The content of aluminum oxide is usually 10 ~ 99.9 wt%, or preferably 20 ~ 99 wt% or more preferably 50 ~ 95 wt%.

As for optional components in a reactant, there may be also used an organic binder such as polyvinyl alcohol or an inorganic binder such as silica series materials or calcium hydroxide. Such binders will be preferably blended in an amount of less than 20 wt% in a reactant. Furthermore, impurities accompanied with a feed material may be contained in a reactant. Catalyst components such as Zn, Ti, Ni, Fe, Co, Zr and Pt may be further contained therein and these components may be previously supported on alumina.

The reactant of the present invention is a solid containing the above-mentioned components and it is preferably a granular material having a grain size of 2 ~ 5 mm for the viewpoint of enhancing the contact opportunity with a gas to be fed to the decomposition. Furthermore, the reactant is preferably a porous granulated material, in which raw materials having a grain size of less than 100 fÊm are homogeneously mixed. For preparing a granular material, a granulated material may be satisfactorily made by a process comprising mixing powders of the above-mentioned raw materials, kneading and granulating them together with a proper amount of water or after a proper binder is optionally added, and then drying the resulting material to evaporate water.

Particularly preferable granular material is a sintered granular material, and it may be a granular material obtained by grinding raw materials after sintering. In a case where raw materials are ground after sintering, such a granular material may be satisfactorily prepared by mixing raw materials, sintering the mixed raw materials after compression molding, and grinding and classifying the resulting sintered material.

As a kneading machine for use in kneading, one is preferable which is capable of carrying out simultaneously mixing and granulation. For example, mixing and granulation can be simultaneously carried out by using a Henshell mixer or a vertical mixer. After the mixing of raw materials is carried out by a Henshell mixer or V-type mixer, however, the granulation thereof may be carried out by a dish-type granulator or drum pelletizer.

PFC decomposition apparatus

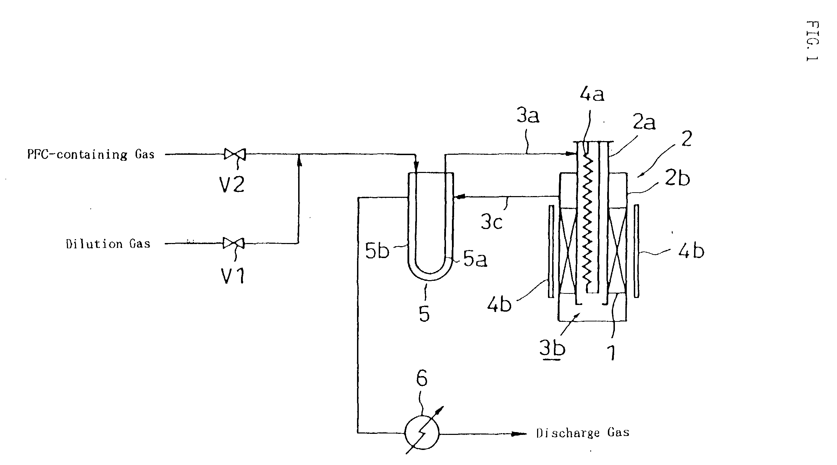

The PFC decomposition apparatus according to the present invention comprises, as shown in Fig.1, a reaction section 2 filled with a solid reactant 1, gas flow passages 3a □' 3c capable of feeding a gas containing perfluoro compounds to said reaction section 2 and of discharging a gas left after the reaction, and heating means 4a, 4b for heating said reaction section 2 or the gas to be fed in the same reaction section 2. In this embodiment, there will be given an example of the decomposition apparatus further comprising valves V1, V2 for regulating the feed quantity of a gas to be treated and the diluting concentration thereof, a pre-heater 5 for preheating the gas to be treated, and a cooler 6 for cooling down a gas to be discharged.

By regulating the feed quantity of PFC-containing gas fed from a semiconductor-manufacturing plant as an exhaust gas by the valve V2 and the feed quantity of a dilution gas such as nitrogen gas by the valve V1, the total feed quantity of a gas to be treated and the dilution concentration thereof are regulated. Thereafter, the gas to be treated is introduced into the tube portion 5a of the pre-heater 5 so as to be pre-heated through heat exchange with a high temperature gas discharged from the reaction section 2 and introduced in the vessel 5b thereof.

The reaction section 2 comprises an inner drum 2a and an outer drum 2b, manufactured of a material endurable at high temperatures of more than 1,000°C, such as an alumina core tube, where the reactant 1 of the present invention is filled and supported between them. On the periphery of the outer drum 2b of said reaction section 2 is provided the heating means 4b equipped with an electric heater such as a ceramic heater, and in the inside of the inner drum 2a is provided the heating means 4a equipped with an electric heater. The reactant 1 is heated by both the heating means 4a and heating means 4b. In each of respective portions of the reactant 1 is placed a thermocouple equipped with a ceramic protection tube for temperature control (not shown). In addition, the reactant 1 may be filled as separated in plural stages, where a reactant having higher intensity may be used in a lower stage.

The gas to be treated, which has been preheated, is introduced into the inner drum 2a of the reaction section 2 through the gas flow passage 3a so as to be heated to the vicinity of a reaction temperature by the heating means 4a. The gas to be treated, which has been heated, is passed through the lower gas flow passage 3b, then caused to flow through the clearances of the granular reactant 1 in contact therewith so as to undergo a decomposing reaction, and thereafter discharged through the gas flow passage 3c.

The discharged gas is passed through the pre-heater 5 and cooled down to a proper temperature by the cooler 6 equipped with an air-cooled fan, and then discharged.

Since nitrogen oxides and hydrogen fluoride will be produced and sulfur oxides will be often produced owing to nitrogen gas dilution or air dilution, furthermore, a treatment column may be placed after the reaction section 2 in order to remove these decomposition products.

Moreover, two sets of the reaction sections 2 are provided in parallel, and both these reaction sections 2 may be alternately used by detecting the consumption situation of the reactant 1 by a fluorine component detection means provided in the rear stage of he reaction section 2. In addition, an absorption section (such as soda lime) for removing the fluorine component may be provided after the fluorine component detection means.

PFC decomposition method

The PFC decomposition method according to the present invention is a perfluoro compounds decomposition method which comprises bringing a gas containing perfluoro compounds under heating into contact with a solid reactant, thereby fixing the fluorine component on said reactant, and characterized in that said reactant is the reactant according to the present invention, as mentioned above. Since the same reactant, decomposing operation and decomposition apparatus are the same as have been aforementioned, the feed materials and conditions for the decomposition method will be described below.

A gas to be treated is a gas containing perfluoro compounds, and the concentration of the perfluoro compounds is preferably as low as 0.1 ~ 10 vol%. In particular, the gas to be treated is preferably diluted with an inert gas such as nitrogen gas or rare gases.

As the perfluoro compounds, there are exemplified $SF_6$, $CF_4$, $C_2F_6$ and $NF_3$. In the case of an exhaust gas from semiconductor-manufacturing plant, fluoro hydrocarbons or chlorine-containing fluoro compounds are occasionally contained therein. The decomposition method of the present invention is also effective for these fluoro compounds.

Although the heating temperature must be changed depending on perfluoro compounds contained in an exhaust gas or other reaction conditions, it will be preferably determined suitably in combination with the decomposition efficiency. In general, heating at more than 500°C is preferable, whereby a decomposition efficiency of near 100% can be obtained particularly at 700 ~ 800°C. In the case of NF3, it is possible to decompose said fluorine compound at more than 250°C.

The flow rate of a gas to be treated is preferably approximately 2 ~ 10 L/min, for example, to 200g of a reactant, and the space velocity thereof is preferably approximately 100 ~ 2,000 hr-1. In addition, the filling height (apparent retention length) of a reactant is preferably more than 50 mm, and more preferably more than 250 mm.

Examples

Examples concretely exhibiting the composition and effects of the present invention will be described here.

Example 1

After CF4 gas was previously diluted to 1 vol% with nitrogen gas, it was introduced at 2 L/min (SV = 240 hr-1) into a high temperature treatment drum (reaction section) having an inner diameter of 50 mm, filled with 400g of a reactant, while the internal temperature thereof is controlled to be about 800°C by a built-in heater. Thus, the decomposition reaction was carried out. At that time, there was used as the reactant a $MgO-Al_2O_3$ series reactant (MgO: 5 wt%) with a diameter of about 3 mm, which was made by mixing 5 parts by weight of MgO powder and 95 parts by weight of $Al_2O_3$ powder together with a small amount of water, compression molding the resulting mixture, and then grinding and classifying the resulting molding.
A discharged gas was measured by non-dispersive infrared absorption spectrum (ND-IR method) and the decomposition efficiency of $CF_4$ was sought in accordance with the following formula.
Decomposition efficiency = (the concentration of $CF_4$ in a feed gas - the concentration of $CF_4$ in a discharge gas) / the concentration of $CF_4$ in a feed gas X 100 (%).
As a result, the decomposition efficiency became 100.0% at a point of time when the internal temperature reached 800°C. After the decomposition efficiency of 100.0% was maintained for about 150 minutes, the decomposition efficiency was gradually lowered, and after 190 minutes elapsed, the decomposition efficiency became less than 90%. In a condition where the decomposition efficiency was 100%, in addition, the fluorine component such as fluorine gas did not almost exist in the discharge gas.

Example 2

The composition of $CF_4$ gas was carried out under the same condition as in Example 1, other than a point that a $MgO-Al_2O_3$ series reactant (MgO: 1 wt%) was used as the reactant in Example 1. As a result, the decomposition efficiency became about 100% at a point of time when the internal temperature reached 800°C, but the decomposition efficiency was gradually lowered after 120 minutes elapsed and it became less than 90% after 150 minutes elapsed.

Comparative Example 1

The composition of $CF_4$ gas was carried out under the same condition as in Example 1, other than a point that an active $Al_2O_3$ agent (made by Sumitomo Chemical Co., NKHD-46HD) was used in place of the $MgO-Al_2O_3$ series reactant in Example 1. As a result, the maximum decomposition efficiency became 100%, but HF and $F_2$ were still considerably detected in the discharge gas, the decomposition efficiency of 100% was maintained only for 50 minutes and the maintenance time for the decomposition efficiency of more than 90% was only 90 minutes.

Comparative Example 2

The composition of $CF_4$ gas was carried out under the same condition as in Example 1, other than a point that a Ni-MgO series reactant (MgO: 13.5 wt%, Ni: 38 wt%) was used as the reactant in Example 1. As a result, the decomposition efficiency was low, this is about 20% in maximum.

Comparative Example 3

The composition of $CF_4$ gas was carried out under the same condition as in Example 1, other than a point that a $Na_2O-Al_2O_3$ series reactant (Na₂O: 1 wt%, Ni: 38 wt%) with a diameter of about 5 mm was used as the reactant in Example 1. As a result, the maximum decomposition efficiency became 100%, but this decomposition efficiency of 100% was maintained only for 30 minutes and the maintenance time for the decomposition efficiency of more than 90% was only 70 minutes.

Brief Description of the Drawings

Fig.1 is a schematic block flow diagram showing one example of the decomposition apparatus according to the present invention.

Description of Reference Numerals

1 - reactant, 2 - reaction section, 3a ~ 3c - gas flow passages, 4a, 4b-heating means.

**Claims**

1.   A perfluoro compounds decomposition method which comprises bringing a gas containing perfluoro compounds under heating into contact with a solid reactant, thereby fixing the fluorine component on said reactant, characterized in that said reactant contains an alkaline earth metal compound and aluminum oxide.

2. A reactant for decomposition of perfluoro compounds, which contains an alkaline earth metal compound and aluminum oxide.

3. A reactant for decomposition of perfluoro compounds, according to claim 2, in which said alkaline earth metal compound is magnesium oxide.

4. A perfluoro compounds decomposition apparatus which comprises a reaction section filled with a solid reactant, gas flow passages capable of feeding a gas containing perfluoro compounds to said reaction section and of discharging a gas left after the reaction, and heating means for heating said reaction section or the gas to be fed to the same reaction section, characterized in that said reactant is a reactant for decomposition of perfluoro compounds according to claim 2 or 3.

FIG. 1

EP 1 123 727 A1

European Patent
Office

**EUROPEAN SEARCH REPORT**

Application Number

EP 01 40 0160

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 2 776 536 A (RHONE POULENC CHIMIE) 1 October 1999 (1999-10-01) * page 12, line 1 - line 3 * * page 12, line 15 - line 16; claims 1,9 * --- | 1-4 | B01D53/68 B01D53/70 A62D3/00 |
| X | EP 0 948 990 A (ABB RESEARCH LTD) 13 October 1999 (1999-10-13) * column 1, line 5 - line 20 * * column 4, line 49 - column 5, line 5; claims 1,2,8,9 * --- | 1-4 | |
| X | EP 0 546 464 A (JAPAN PIONICS) 16 June 1993 (1993-06-16) * page 3, line 24 - line 32 * * page 3, line 43 - line 54; figure 1 * ----- | 1-4 | |
| | | | **TECHNICAL FIELDS SEARCHED (Int.Cl.7)** B01D A62D |

The present search report has been drawn up for all claims

| Place of search | Date of completion of the search | Examiner |
|---|---|---|
| BERLIN | 7 June 2001 | Cubas Alcaraz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

**ANNEX TO THE EUROPEAN SEARCH REPORT
ON EUROPEAN PATENT APPLICATION NO.**               EP 01 40 0160

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2001

| Patent document cited in search report | | Publication date | Patent family member(s) | | Publication date |
|---|---|---|---|---|---|
| FR 2776536 | A | 01-10-1999 | CN | 1233526 A | 03-11-1999 |
| | | | EP | 0948995 A | 13-10-1999 |
| | | | JP | 11342318 A | 14-12-1999 |
| EP 0948990 | A | 13-10-1999 | DE | 19813582 A | 30-09-1999 |
| EP 0546464 | A | 16-06-1993 | DE | 69218133 D | 17-04-1997 |
| | | | DE | 69218133 T | 19-06-1997 |
| | | | KR | 126123 B | 19-12-1997 |
| | | | US | 5597540 A | 28-01-1997 |
| | | | US | 5378444 A | 03-01-1995 |
| | | | JP | 3073321 B | 07-08-2000 |
| | | | JP | 5237324 A | 17-09-1993 |

EPO FORM P0459

For more details about this annex : see Official Journal of the European Patent Office, No. 12/82